# FASCICULE DE BREVET EUROPEEN

(11) **EP 0 657 280 B1**
(45) Date de publication et mention de la délivrance du brevet: **21.03.2001**
(21) Numéro de dépôt: 94402831.5
(22) Date de dépôt: 08.12.1994
(51) Int. Cl.: B32B 27/36, B32B 27/20, E04C 2/54, A01G 9/14

(54) **Procédé de fabrication d'une plaque à base de polycarbonate, destinée à la fabrication de bâtiment, notamment de serre**
Verfahren zur Herstellung einer Verbundplatte aus Polycarbonat zur Verwendung in Gebäuden, insbesondere in Treibhäusern
Method for producing a polycarbonate panel to be used in buildings, specially in greenhouses

(30) Priorité: 09.12.1993 FR 9314770
(43) Date de publication de la demande: 14.06.1995
(73) Titulaire: KAYSERSBERG PACKAGING, 68240 Kaysersberg (FR)
(72) Inventeur: Coudert, Catherine, F-68000 Colmar (FR); Coste, Jean-Philippe, F-68240 Kaysersberg (FR)
(74) Mandataire: David, Daniel

(56) Documents cités:
- EP-A- 0 359 622
- EP-A- 0 428 937
- WO-A-93/03405
- FR-A- 1 469 605
- FR-A- 2 176 088
- FR-A- 2 569 707
- DATABASE WPI Week 7918, Derwent Publications Ltd., London, GB; AN 79-34534B (18) & JP-A-54 040 146 (OKURA INDUSTRIAL KK) 28 Mars 1979

## Description

L'invention concerne généralement un procédé de fabrication de plaques en plastique, et plus précisément à base de polycarbonate, comprenant une couche de revêtement pour réduire l'effet de serre.

L'invention trouve application dans l'industrie du bâtiment.

Plus précisément, ces plaques de polycarbonate sont utilisées dans le bâtiment, comme panneaux formant des vitres, par exemple pour des vitrages industriels ou de salle de sport, comme "sheds", lanterneaux, toiture, ou encore comme matériau de construction de vérandas. Ces plaques trouvent également application dans le domaine de l'agriculture comme matériau pour serres.

Or, un tel matériau en polycarbonate transmet en grande partie le rayonnement lumineux solaire, en particulier dans des longueurs d'onde de 0,4 à 2 µm. Cependant, le rayonnement transmis par la plaque de polycarbonate est partiellement absorbé par des parois, des objets, des végétaux ou le sol, situés derrière cette plaque. Ces différents éléments émettent quant à eux dans les longueurs d'onde situées principalement entre 4 et 20 µm, c'est-à-dire dans l'infrarouge lointain. Cette émission ou radiation est calorifique. De plus, la plaque en polycarbonate a pour caractéristique de retenir le rayonnement dans ces mêmes longueurs d'onde, c'est-à-dire de 4 à 20 µm et d'être un bon isolant thermique. Par conséquent, la combinaison de ces caractéristiques conduit à une augmentation excessive de température aux endroits situés derrière une plaque en polycarbonate ou dans une enceinte formée de plaques de polycarbonate. Ce phénomène correspond à l'effet de serre. A l'intérieur de constructions à base de tels matériaux, par exemple des serres ou des vérandas, on peut atteindre des températures de l'ordre de 50 à 70° C lorsque l'ensoleillement est important en particulier l'été dans les régions de climat tempéré ou méditerranéen.

Dans les serres, ce phénomène peut engendrer le flétrissement et le dépérissement de certains végétaux.

On a déjà cherché à limiter l'augmentation de température sous les plaques de polycarbonate en appliquant sur ces dernières un revêtement capable de réfléchir partiellement le rayonnement solaire, tout en conservant pour ces plaques une bonne transmission lumineuse.

La demande de brevet allemand n° 3444595, décrit, d'une part, des plaques en plastique, transparentes, notamment en polycarbonate, qui comportent sur une de leurs faces, un revêtement qui à la fois réfléchirait les infrarouges et laisserait passer le rayonnement visible et décrit, d'autre part, leur procédé de fabrication.

Ce procédé consiste à faire passer une plaque originelle en matière plastique sous une filière à fente s'étendant sur toute la largeur de la plaque, à appliquer sur la plaque un voile d'une dispersion de particules d'aluminium en solution dans un polymère filmogène en milieu solvant organique et à faire passer la plaque recouverte sous un courant chaud réglé de façon à chauffer le revêtement à une température inférieure au point d'ébullition du solvant.

Ce procédé présente un certain nombre d'inconvénients. En effet, il utilise comme matière première pour le laquage, une composition comprenant un solvant organique, qui présente un risque potentiel de pollution. Compte-tenu des exigences de la réglementation sur l'environnement, on cherche maintenant à remplacer ce type de procédé. De plus, l'inflammabilité et la toxicité de ces solvants organiques peuvent rendre leur manipulation dangereuse.

Par ailleurs, le produit obtenu par ce procédé de revêtement par laquage, n'est pas totalement satisfaisant.

D'une part, la structure de la plaque dans son ensemble n'est pas homogène. En effet, la plaque comprend par exemple une couche de coeur à base de polycarbonate et une couche de revêtement à base de polyacrylate, filmogène. La nature des couches est donc différente.

Sous l'effet des intempéries, la plaque peut présenter, au cours du vieillissement, un grand nombre de fissures dont certaines pénètrent profondément dans la couche de coeur en polycarbonate. Dans la pratique, ces importantes fissurations entraînent un affaiblissement mécanique de la plaque et un écaillage de la couche de revêtement obtenue par laquage. De ce fait, des particules d'aluminium se désolidarisent de la plaque et la couche de revêtement disparaît. Le traitement de laquage n'est plus efficace. Ce phénomène s'explique par la différence de nature entre la couche de coeur et la couche de revêtement. En effet, les polymères les constituant n'ont pas les mêmes propriétés telles que le module d'élasticité, l'absorption d'eau, et l'élongation à la rupture.

Il est donc souhaitable de fabriquer des plaques en polycarbonate, homogènes du point de vue des propriétés des matières premières, comportant une couche de revêtement réfléchissant partiellement le rayonnement solaire, qui soit résistante aux intempéries, au moyen d'un procédé simple, non polluant et sans danger.

On connaît par ailleurs la technique de coextrusion de feuilles multicouches du type polystyrène, dont une couche centrale comprend de la poudre d'aluminium (afin d'améliorer les propriétés d'isolation à la chaleur et l'aspect brillant de cette feuille). Mais, on n'a jamais décrit de procédé de fabrication de plaque en polycarbonate ayant la propriété de diminuer l'effet de serre tout en conservant une bonne transmission lumineuse.

La présente invention a donc pour but de fournir un nouveau procédé qui pallie l'ensemble des inconvénients cités précédemment.

L'invention a pour but de fournir un procédé permettant de fabriquer une plaque dont l'effet de serre est diminué c'est-à-dire sous laquelle l'augmentation de température est limitée, et pour laquelle une bonne transmission lumineuse est conservée.

L'invention a également pour but de fournir un procédé pour fabriquer une plaque dont la couche de coeur et la ou les couches de revêtement sont toutes à base de polycarbonate.

L'invention a encore pour but de fournir un procédé de fabrication d'une plaque dont l'éblouissement entraîné par le soleil est diminué.

L'invention a pour objet un nouveau procédé de fabrication d'une plaque à base de polycarbonate, destinée à la fabrication de bâtiments, notamment de serre et comprenant une couche de coeur et au moins une couche de revêtement.

Selon une caractéristique essentielle de l'invention, ce procédé consiste à préparer une composition pour ladite couche de revêtement en incorporant 10 à 30 % en poids des particules métalliques brillantes d'un diamètre de 200 à 500 µm dans du polycarbonate, et coextruder ladite couche de revêtement avec la couche de coeur précitée, pour diminuer la transmission lumineuse de la plaque et de manière à réduire l'effet de serre.

Selon une caractéristique avantageuse de l'invention, les particules métalliques précitées sont des particules d'aluminium.

Ce procédé utilisant la technique de coextrusion pour munir une plaque à base de polycarbonate, d'une couche de revêtement à base de polycarbonate comprenant des particules d'aluminium, dans le but de réduire l'effet de serre, n'était absolument pas évident.

En effet, l'homme de l'art n'était pas guidé vers cette technique et au contraire l'avait écartée car elle présentait des obstacles d'ordre technologique.

Le comportement du mélange polycarbonate-particules métalliques est particulier.

En effet, les particules métalliques et notamment d'aluminium, modifient les caractéristiques de fluidité de la couche lors de la coextrusion, ce mélange devenant très fluide et rendant la coextrusion délicate. De plus, sous l'action de la vis d'extrusion, les particules métalliques perdent leur brillance, subissant un traitement mécanique modifiant leur aspect extérieur.

D'autres caractéristiques et avantages de l'invention apparaîtront plus clairement à la lecture de la description détaillée qui suit, en référence aux dessins annexés dans lesquels :

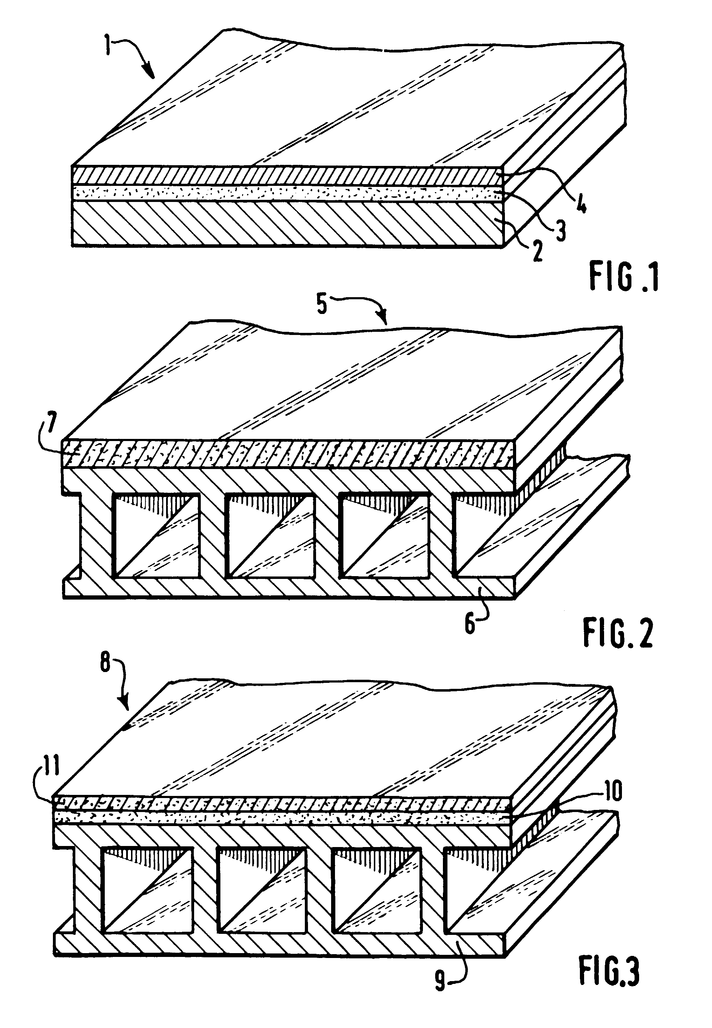

- la figure 1 représente schématiquement une plaque obtenue selon le procédé de l'invention, dans le mode de réalisation où la couche de coeur en polycarbonate, est recouverte d'une couche intermédiaire de revêtement diminuant partiellement la transmission lumineuse et d'une couche de revêtement externe absorbant le rayonnement ultraviolet ;
- la figure 2 représente schématiquement une plaque alvéolaire, obtenue selon le procédé de l'invention, dans le mode de réalisation où la couche de coeur en polycarbonate est recouverte d'une couche de revêtement externe à la fois diminuant partiellement la transmission lumineuse et absorbant le rayonnement ultraviolet ;
- la figure 3 représente schématiquement une plaque alvéolaire obtenue selon le procédé selon l'invention, dans le mode de réalisation où la couche de coeur en polycarbonate alvéolaire est recouverte d'une couche de revêtement intermédiaire diminuant partiellement la transmission lumineuse et d'une couche de revêtement externe diminuant partiellement la transmission lumineuse tout en absorbant le rayonnement ultraviolet ; et

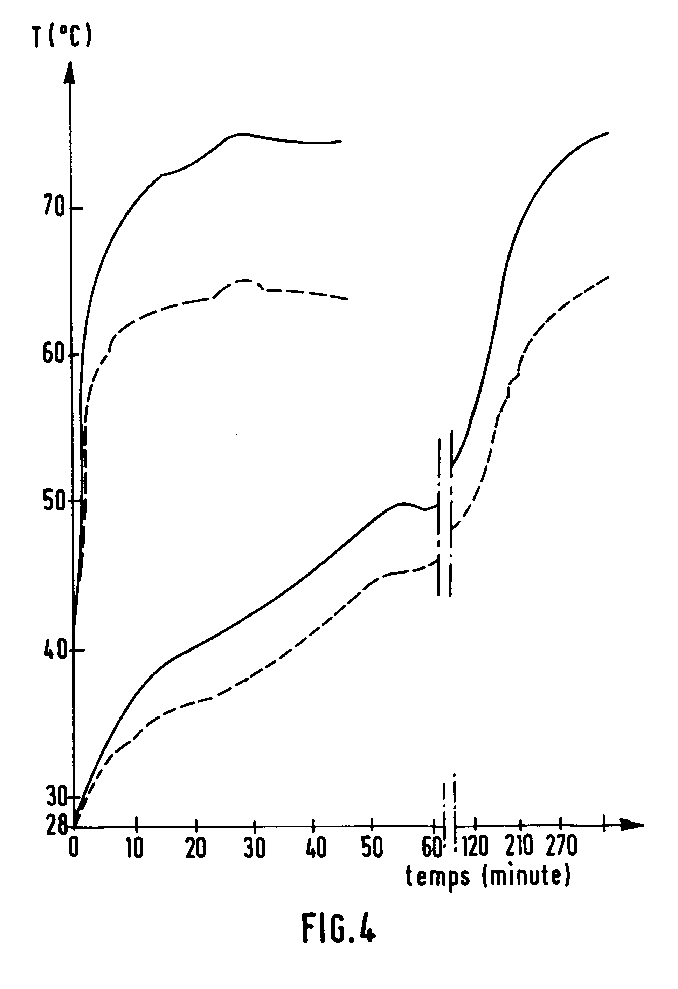

- la figure 4 représente schématiquement des courbes comparatives de l'augmentation en température de l'intérieur d'une boîte dont le toit ou couvercle est constitué d'une plaque selon l'invention, qui est placée sous le soleil, en fonction du temps.

Dans la présente invention, les inventeurs ont choisi une concentration en particules métalliques brillantes qui, au cours de l'étape de coextrusion, permet d'assurer au mélange polycarbonate-particules, une fluidité compatible avec la technique de coextrusion et un type de particules qui, après avoir subi ce traitement de coextrusion, gardent leur brillance.

Pour ce faire, des particules métalliques brillantes d'un diamètre moyen de 200 à 500 µm sont incorporées dans du polycarbonate en granulés.

Le mélange comprend entre 10 pour cent et 30 pour cent en poids de particules métalliques. Ces particules peuvent être en tout type de métal présentant des propriétés appropriées de réflection au rayonnement lumineux solaire et de brillance. Elles sont par exemple en argent, en bronze, en cuivre et de préférence en aluminium.

Lors de la coextrusion, on choisira pour la couche de revêtement formée à partir du mélange de polycarbonate et de particules métalliques, une épaisseur dans l'intervalle allant de 20 à 200 µm et de préférence dans l'intervalle allant de 50 à 150 µm.

Selon le degré recherché de transmission du rayonnement lumineux solaire, et par conséquent selon l'efficacité recherchée sur la diminution de l'effet de serre, on jouera sur les paramètres de teneur en poids de particules métalliques et d'épaisseur de la couche de revêtement. Cette couche de revêtement est prévue du côté de la plaque faisant face au rayonnement solaire, lorsque la plaque est utilisée.

Le rayonnement solaire comprend des rayons ultraviolets qui dégradent le polycarbonate. Il est donc nécessaire de protéger par ailleurs les plaques en polycarbonate.

On peut incorporer dans la couche de revêtement comprenant des particules métalliques, destinée à diminuer la transmission lumineuse de la plaque, un ou plusieurs agents absorbant le rayonnement ultraviolet. On peut également prévoir une couche de revêtement supplémentaire à base de polycarbonate comprenant un ou plusieurs agents absorbant le rayonnement ultraviolet.

Les agents absorbant le rayonnement ultraviolet qui sont utilisés dans une couche de revêtement externe doivent être peu volatils. Ces agents sont par exemple des bis-benzotriazoles, telles que le produit ADK STAB LA31 commercialisé par la société ADEKA ARGUS.

Plusieurs modes de réalisation de plaques sont possibles.

Différentes structures de plaque sont illustrées par les figures 1 à 3.

Selon la figure 1, la plaque 1 en polycarbonate obtenue selon le procédé de l'invention est une plaque pleine. Elle comprend une couche de coeur 2 en polycarbonate, une couche de revêtement intermédiaire 3 en polycarbonate comportant des particules d'aluminium et une couche de revêtement externe 4 en polycarbonate comprenant un agent absorbant le rayonnement ultraviolet du type de ceux mentionnés ci-dessus.

Suivant un autre mode de réalisation, la couche intermédiaire comprend le cas échéant un agent absorbant le rayonnement ultraviolet, identique ou différent de celui incorporé dans la couche de revêtement intermédiaire.

La figure 2 représente une plaque alvéolaire 5. La couche de coeur 6 en polycarbonate alvéolaire est recouverte d'une seule couche de revêtement en polycarbonate 7 comprenant à la fois des particules d'aluminium et au moins un agent absorbant le rayonnement ultraviolet, peu volatil.

Suivant la figure 3, la plaque alvéolaire 8 en polycarbonate comprend une couche de coeur 9 en polycarbonate alvéolaire, une couche de revêtement intermédiaire 10 comportant des particules d'aluminium et une couche de revêtement externe 11 comprenant à la fois des particules d'aluminium et un agent absorbant le rayonnement ultraviolet.

Suivant un autre mode de réalisation proche de celui représenté à la figure 3, la couche de revêtement intermédiaire peut comprendre uniquement un à plusieurs agents absorbant le rayonnement ultraviolet, sans particules métalliques.

Dans ce dernier cas, la plaque obtenue excepté la couche de revêtement externe diminuant la transmission lumineuse et l'effet de serre, est du type de celle décrite dans la demande de brevet européen n° 0359622 où la couche intermédiaire contenant au moins un agent absorbant le rayonnement ultraviolet est une couche réservoir, et où l'agent absorbant incorporé dans la couche externe peut être différent de celui de la couche réservoir ou intermédiaire, tout en étant peu volatil.

Le procédé selon l'invention pour fabriquer chacune de ces plaques consiste dans une première étape à préparer les compositions des couches de coeur et de revêtement, et plus particulièrement pour les couches de revêtement, à préparer des mélanges de polycarbonate, de particules métalliques brillantes et/ou d'agent absorbant le rayonnement ultraviolet.

Puis, dans une seconde étape, on réalise la coextrusion d'un flux en deux ou trois couches, suivant le type de plaque souhaité, à partir des compositions décrites ci-dessus.

La ou les couches de revêtement sont déposées simultanément sur la couche de coeur au moyen d'un bloc de coextrusion, dénommé dans la technique "feed-block".

Suivant ce procédé, les deux ou trois flux de matière sont rassemblés dans le bloc de coextrusion et le courant unique en résultant est conduit jusqu'à la filière où il est réparti sur l'ensemble de la laize. On obtient une plaque de même structure en utilisant une filière multicouches.

Dans le cas d'une plaque alvéolaire, la matière est calibrée sous vide à l'aide d'un conformateur à la sortie de la filière.

Un exemple de procédé d'extrusion est décrit dans Kunstoff-Extrusions-technik, Tome II : Extrusionsanlagen, page 200 de Hanser-Knappe-Potente aux éditions Hanser.

En outre, suivant le procédé selon l'invention, la plaque peut être de plus teintée dans la masse, notamment en opalin, fumée ou gris.

On a fabriqué une plaque suivant le procédé de l'invention, sur laquelle on a réalisé des mesures de transmission lumineuse et de performances par rapport à l'effet de serre.

Cette plaque est une plaque alvéolaire en polycarbonate de 16 millimètres d'épaisseur, comprenant trois couches. La couche de coeur alvéolaire, est en polycarbonate. Le polycarbonate a pour caractéristique d'être incolore et translucide.

La couche de revêtement intermédiaire comporte des particules ou paillettes d'aluminium brillantes. Le diamètre des particules utilisées pour la composition de cette couche de revêtement, est d'environ 400 µm.

Ces particules sont incorporées dans le polycarbonate à raison de 20 pour cent en poids de la composition de la couche. L'épaisseur moyenne de cette couche de revêtement après coextrusion est d'environ 43 µm.

La couche de revêtement externe en polycarbonate comprend un agent absorbant le rayonnement ultraviolet dans une concentration de 5 pour cent en poids de la composition de la couche. L'épaisseur de cette couche, une fois coextrudée, est de l'ordre de 65 µm.

La transmission lumineuse moyenne est mesurée par un test ASTM D 1003-61. Dans le cas de cette plaque obtenue suivant le procédé de l'invention, elle est de 48 pour cent, ce qui reste une très bonne transmission lumineuse.

On réalise des plaques témoins de 16 millimètres d'épaisseur ayant une structure similaire en trois couches où la couche de revêtement intermédiaire ne comprend pas de particules métalliques brillantes, mais est colorée ou reste translucide.

Les plaques témoins A, B et C sont respectivement translucides, teintées dans la masse en opalin et fumé.

Pour chacune des plaques obtenues suivant le procédé de l'invention ou plaques témoins, on mesure la transmission lumineuse et l'effet de serre.

Pour cette dernière caractéristique, on relève la température à l'intérieur de boîtes noires sur lesquelles la paroi du dessus faisant face au rayonnement solaire est substituée par la plaque obtenue suivant l'invention ou par une plaque témoin. On place un thermocouple au centre de la boîte.

Le montage est disposé en plein soleil et on mesure la variation de température en relevant la température au cours du temps.

La figure 4 représentant des courbes de températures en fonction du temps, montrent bien la diminution de l'effet de serre pour une plaque comportant un revêtement de particules métalliques ou pailletée (---) par rapport à une plaque témoin translucide (―). Plus la température de départ à l'intérieur de la boîte est élevée, plus la diminution de l'élévation de température est importante (voir les courbes dont la température de départ à l'intérieur de la boîte ou serre est de 40°C). En période de grand ensoleillement, la couche de revêtement munie de particules métalliques brillantes a d'autant plus d'effet sur la diminution de l'effet de serre.

On a rapporté dans le tableau ci-après les mesures de transmission lumineuse pour chacune des plaques ainsi que le rapport de la température sous la plaque I, obtenue suivant le procédé de l'invention, c'est-à-dire présentant un revêtement de particules métalliques ou revêtement pailleté, sur la température mesurée sous chaque plaque X, après 40 minutes d'exposition au soleil. Les températures sont exprimées en °C. X correspond à chacune des plaques I, A, B et C respectivement mesurées.

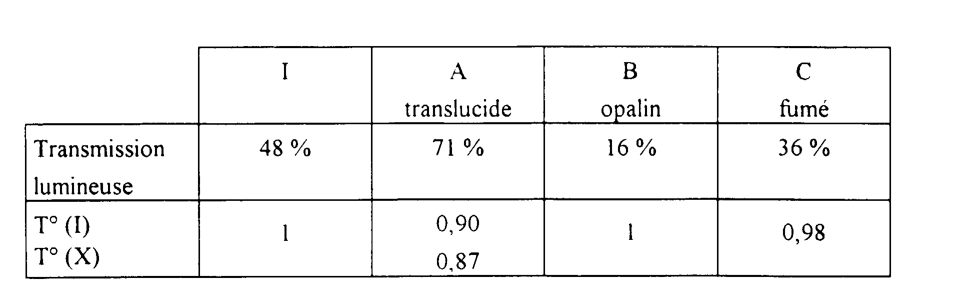

Ce tableau montre que la diminution de l'élévation de température, recherchée pour réduire l'effet de serre, est observée pour la plaque obtenue suivant le procédé de l'invention et pour la plaque témoin B colorée en opalin. Cependant, dans le cas de la plaque témoin B, la transmission lumineuse est beaucoup plus réduite (16 %) et largement insuffisante. Par ailleurs, les témoins A et C, plaque translucide et plaque fumée, ne limitent pas l'augmentation de température et donc l'effet de serre, comparativement à la plaque obtenue suivant le procédé de l'invention.

Il ressort donc de ce qui précède, que l'équilibre le plus favorable entre la transmission lumineuse et la diminution de l'élévation de température sous plaque est atteint pour la plaque obtenue suivant le procédé de l'invention.

L'invention comprend tous les moyens équivalents et complémentaires des moyens décrits, qui sont à la portée de l'homme du métier.

## Revendications

1. Procédé de fabrication d'une plaque à base de polycarbonate destinée à la fabrication de bâtiments, notamment de serre, et comprenant une couche de coeur et au moins une couche de revêtement, caractérisé en ce qu'il consiste à :
- préparer une composition pour ladite couche de revêtement en incorporant 10 à 30 pour cent en poids de particules métalliques brillantes d'un diamètre moyen allant de 200 à 500 µm dans du polycarbonate, et
- coextruder ladite couche de revêtement en polycarbonate avec ladite couche de coeur en polycarbonate, pour diminuer partiellement la transmission lumineuse de la plaque et de manière à réduire l'effet de serre.

2. Procédé selon la revendication 1, caractérisé en ce que les particules métalliques sont des particules d'aluminium, d'argent, de bronze, de cuivre ou tout autre métal ayant des propriétés de brillance.

3. Procédé selon la revendication 2, caractérisé en ce que les particules métalliques sont de préférence des particules d'aluminium.

4. Procédé selon l'une des revendications précédentes, caractérisé en ce que la couche de revêtement contenant lesdites particules métalliques a une épaisseur de 20 à 200 µm et de préférence de 50 à 150 µm.

5. Procédé selon l'une des revendications précédentes, caractérisé en ce que la composition pour ladite couche de revêtement comprend de plus un agent absorbant le rayonnement ultraviolet.

6. Procédé selon l'une des revendications 1 à 4, caractérisé en ce qu'il consiste à :
- préparer de plus, une composition pour une couche de revêtement externe en incorporant un agent absorbant le rayonnement ultraviolet dans du polycarbonate,
- préparer une composition pour une couche de revêtement intermédiaire en incorporant 10 à 30 pour cent en poids de particules métalliques d'un diamètre moyen allant de 200 à 500 µm, dans du polycarbonate, et
- coextruder lesdites couches de revêtement externe et intermédiaire avec les couches de coeur.

7. Procédé selon l'invention 6, caractérisé en ce que l'on incorpore de plus dans la composition de la couche de revêtement intermédiaire un agent absorbant le rayonnement ultraviolet.

8. Procédé selon l'une des revendications 1 à 7, caractérisé en ce qu'il consiste à :
- préparer une composition pour une couche de revêtement externe en incorporant un agent absorbant le rayonnement ultraviolet et 10 à 30 pour cent en poids de particules métalliques d'un diamètre moyen allant de 200 à 500 µm, dans du polycarbonate ;
- préparer une composition pour une couche de revêtement intermédiaire en incorporant soit l'agent précité ou un autre agent absorbant le rayonnement ultraviolet, soit des particules métalliques d'un diamètre moyen allant de 200 à 500 µm, dans du polycarbonate, et
- coextruder lesdites couches de revêtement externe et intermédiaire avec la couche de coeur.

9. Procédé selon l'une des revendications précédentes, caractérisé en ce que ladite plaque est alvéolaire.

10. Procédé selon l'une des revendications précédentes, caractérisé en ce que ladite plaque est de plus teintée dans la masse, notamment en opalin, fumée ou gris.

## Claims

1. Process for manufacturing a polycarbonate-based panel intended for the construction of buildings, particularly of greenhouses, and comprising a core layer and at least one coating layer, the said process being characterised in that it consists:
- in preparing a composition for the said coating layer while incorporating 10 to 30 per cent by weight of shiny metal particles having an average diameter ranging from 200 to 500 µm, in polycarbonate, and
- in co-extruding the said coating layer made of polycarbonate with the said core layer made of polycarbonate, in order to partially lower the light transmission of the panel and in such a way as to reduce the greenhouse effect.

2. Process according to claim 1, characterised in that the metal particles are particles of aluminium, silver, bronze, copper or any other metal having shiny properties.

3. Process according to claim 2, characterised in that the metal particles are preferably aluminium particles.

4. Process according to one of the preceding claims, characterised in that the coating layer containing the said metal particles has a thickness of 20 to 200 µm, and preferably of 50 to 150 µm.

5. Process according to one of the preceding claims, characterised in that the composition for the said coating layer also comprises an ultraviolet-radiation-absorbing agent.

6. Process according to one of claims 1 to 4, characterised in that it consists:
- in also preparing a composition for an external coating layer while incorporating an ultraviolet-radiation-absorbing agent in polycarbonate,
- in preparing a composition for an intermediate coating layer while incorporating 10 to 30 per cent by weight of metal particles having an average diameter ranging from 200 to 500 µm, in polycarbonate, and
- in co-extruding the said external and intermediate coating layers with the core layers.

7. Process according to claim 6, characterised in that an ultraviolet-radiation-absorbing agent is also incorporated in the composition of the intermediate coating layer.

8. Process according to one of claims 1 to 7, characterised in that it consists:
- in preparing a composition for an external coating layer while incorporating an ultraviolet-radiation-absorbing agent and 10 to 30 per cent by weight of metal particles having an average diameter ranging from 200 to 500 µm, in polycarbonate;
- in preparing a composition for an intermediate coating layer while incorporating either the aforesaid agent or another ultraviolet-radiation-absorbing agent, or metal particles having an average diameter ranging from 200 to 500 µm, in polycarbonate, and
- in co-extruding the said external and intermediate coating layers with the core layer.

9. Process according to one of the preceding claims, characterised in that the said panel is cellular.

10. Process according to one of the preceding claims, characterised in that the said panel is also tinted in the mass, especially in opaline, smoke or grey.

## Patentansprüche

1. Verfahren zur Herstellung einer Platte aus Polycarbonat zur Verwendung in Gebäuden, insbesondere in Treibhäusern, mit einer Kernschicht und mindestens einer Überzugsschicht, gekennzeichnet durch die folgenden Schritte:
- Herstellen einer Zusammensetzung für die Überzugsschicht, wobei 10 bis 30 Gew.-% metallisch glänzender Partikel mit einem mittleren Durchmesser von 200 bis 500 µm dem Polycarbonat zugesetzt werden, und
- Koextrudieren der Überzugsschicht aus Polycarbonat mit der Kernschicht aus Polycarbonat, um die Lichttransmission der Platte teilweise so zu verringern, daß der Treibhauseffekt verringert wird.

2. Verfahren gemäß Anspruch 1, dadurch gekennzeichnet, daß die metallischen Partikel Partikel aus Aluminium, Silber, Bronze, Kupfer oder aus jedem anderen Metall sind, welche die Eigenschaft haben, zu glänzen.

3. Verfahren gemäß Anspruch 2, dadurch gekennzeichnet, daß die metallischen Partikel vorzugsweise Partikel aus Aluminium sind.

4. Verfahren gemäß einem der vorstehenden Ansprüche, dadurch gekennzeichnet, daß die Überzugsschicht, welche die metallischen Partikel enthält, eine Dicke von 20 bis 200 µm und vorzugsweise von 50 bis 150 µm hat.

5. Verfahren gemäß einem der vorstehenden Ansprüche, dadurch gekennzeichnet, daß die Zusammensetzung für die Überzugsschicht überdies ein Mittel enthält, das ultraviolette Strahlung absorbiert.

6. Verfahren gemäß einem der Ansprüche 1 bis 4, dadurch gekennzeichnet, daß es aus den folgenden Schritten besteht:
- zusätzliches Herstellen einer Zusammensetzung für eine äußere Überzugsschicht, wobei dem Polycarbonat ein ultraviolette Strahlung absorbierendes Mittel zugesetzt wird,
- Herstellen einer Zusammensetzung für eine zwischenliegende Überzugsschicht, wobei dem Polycarbonat 10 bis 30 Gew.-% metallischer Partikel mit einem mittleren Durchmesser von 200 bis 500 µm zugesetzt werden, und
- Koextrudieren der externen und zwischenliegenden Überzugsschicht mit der Kernschicht.

7. Verfahren gemäß Anspruch 6, dadurch gekennzeichnet, daß man überdies der Zusammensetzung der zwischenliegenden Überzugsschicht ein ultraviolette Strahlung absorbierendes Mittel zusetzt.

8. Verfahren gemäß einem der Ansprüche 1 bis 7, gekennzeichnet durch die folgenden Schritte:
- Herstellen einer Zusammensetzung für eine äußere Überzugsschicht, wobei dem Polycarbonat ein ultraviolette Strahlung absorbierendes Mittel und 10 bis 30 Gew.-% metallischer Partikel mit einem Durchmesser von 200 bis 500 µm zugesetzt werden,
- Herstellen einer Zusammensetzung für eine zwischenliegende Überzugsschicht, wobei entweder das vorerwähnte Mittel oder ein anderes ultraviolette Strahlung absorbierendes Mittel oder metallische Partikel mit einem mittleren Durchmesser von 200 bis 500 µm dem Polycarbonat zugesetzt wird oder werden, und
- Koextrudieren der äußeren und zwischenliegenden Überzugsschicht mit der Kernschicht.

9. Verfahren gemäß einem der vorstehenden Ansprüche, dadurch gekennzeichnet, daß die Platte zellig ist.

10. Verfahren gemäß einem der vorstehenden Ansprüche, dadurch gekennzeichnet, daß die Platte überdies in der Masse gefärbt, insbesondere opal, rauchfarbig oder grau ist.
